# EUROPEAN PATENT APPLICATION

(11) **EP 4 851 697 A1**
(43) Date of publication of application: **09.12.2026**
(21) Application number: 25194635.6
(22) Date of filing: 07.08.2025
(51) Int. Cl.: G02B 27/01, B60K 35/21, B60K 35/23, G02B 30/27

(54) **DISPLAY DEVICE AND MANUFACTURING METHOD THEREOF**

(30) Priority: 06.06.2025 CN 202510757094
(71) Applicant: Wuhan China Star Optoelectronics Technology Co., Ltd, Wuhan, Hubei 430079 (CN)
(72) Inventor: ZHANG, Guiyang, Wuhan, Hubei 430079 (CN); YANG, Huanli, Wuhan, Hubei 430079 (CN); HE, Rui, Wuhan, Hubei 430079 (CN); AI, Fei, Wuhan, Hubei 430079 (CN)
(74) Representative: Herrero & Asociados, S.L.

(57) **Abstract**

Embodiments of the present application disclose a display device (100) and a manufacturing method thereof. The display device (100) includes a display module (10) and an imaging component (20), the display module (10) includes a display panel (11) and a lens grating layer (12), and the lens grating layer (12) includes lenses (121). A width of the lens (121) satisfies a first relational formula: D = 2H × tanθ', and θ' = arcsin[(sinθ) / n0].

## Description

### TECHNICAL FIELD

The present application relates to the field of display technologies, in particular to a display device and a manufacturing method thereof.

### BACKGROUND

The current mainstream augmented reality head-up display (AR-HUD) still focuses on two-dimensional display, which has two major drawbacks: Firstly, the adhesion between a two-dimensional virtual image and a real scene on the ground is insufficient, resulting in a navigation arrow or obstacle warning information not being able to accurately match an actual road condition; Secondly, limited by optical design, a distance of the virtual image is generally fixed, preventing a navigation display from covering farther distance.

The emergence of AR-HUD three-dimensional technology provides a breakthrough solution to the aforementioned problems. However, the current three-dimensional display technology suffers from the problem of serious crosstalk between a left-eye image and a right-eye image, leading to poor display effect.

### SUMMARY

Embodiments of the present application provide a display device and a manufacturing method thereof, which can reduce the risk of crosstalk between a first image and a second image, thereby improving a three-dimensional display effect.

Embodiments of the present application provide a display device, including: a display module including a display panel and a lens grating layer, wherein the lens grating layer is disposed on a light-emitting side of the display panel, the display panel is configured to display a first image and a second image, and the lens grating layer is configured to separate the first image from the second image to form the first image and the second image parallactic from each other; and an imaging component configured to reflect the first image and the second image parallactic from each other to an eyeball or an eye-box to form a three-dimensional virtual image. The lens grating layer includes a plurality of lenses, and on an optical axis of each lens of the plurality of lenses, a distance from an intersection point of an arc surface of the lens and the optical axis of the lens to a pixel of the display panel is defined as a first distance; and a width of the lens satisfies a first relational formula: D = 2H × tanθ', and θ' = arcsin[(sinθ)/n0], wherein D represents the width of the lens, H represents the first distance, θ represents a half-field-of-view angle of the display device, n0 represents a refractive index of at least one light-transmitting film layer, disposed on a light-emitting side of the pixel in the display module, as a light-transmitting medium body, and the light-transmitting medium body includes at least the lens grating layer.

In some embodiments of the present application, 50 micrometers ≤ D ≤ 300 micrometers, and 100 micrometers ≤ H ≤ 1500 micrometers.

In some embodiments of the present application, the lens grating layer further includes a light-transmitting substrate, the plurality of lenses are disposed on a side of the light-transmitting substrate away from the display panel, and a focal length of the lens is equal to the first distance; and a radius of curvature of the lens satisfies a second relational formula: R = flens × (n1 - n2) / n2, where R represents the radius of curvature of the lens, flens represents the focal length of the lens, n1 represents a refractive index of the lens, n2 represents a refractive index of the light-transmitting substrate, and n1 > n2.

In some embodiments of the present application, 50 micrometers ≤ R ≤ 300 micrometers.

In some embodiments of the present application, on the optical axis of the lens, a height of the lens satisfies a third relational formula: $h 1 = R - \sqrt{{R}^{2} - {\left(\frac{D}{2}\right)}^{2}}$ , where h1 represents the height of the lens.

In some embodiments of the present application, the display device further includes a protective layer, the protective layer covers a side of the plurality of lenses away from the light-transmitting substrate.

In some embodiments of the present application, the display device further includes a reflective mirror assembly configured to reflect the first image and the second image parallactic from each other to the imaging component.

In some embodiments of the present application, the imaging component is a windshield panel of a vehicle.

In some embodiments of the present application, the reflective mirror assembly includes a first reflective mirror and a second reflective mirror, and the first reflective mirror is arranged on the light-emitting side of the display module; the first image and the second image pass through the first reflective mirror, the second reflective mirror, and the imaging component in this order and reach the eyeball or the eye-box; and the first reflective mirror is one of a planar mirror, a convex mirror, and a concave mirror; and the second reflective mirror is a concave mirror.

In some embodiments of the present application, the display panel includes a plurality of pixel units, and each of the pixel units corresponds to one of the lenses; each of the pixel units includes a first pixel configured to display the first image and a second pixel configured to display the second image, and the first pixel and the second pixel are disposed on both sides of the optical axis of a corresponding one of the lenses.

Embodiments of the present application also provide a manufacturing method of a display device, including: providing a lens grating layer on a light-emitting side of a display panel to form a display module, wherein the display panel is configured to display a same scene in a first image and a second image, the lens grating layer is configured to separate the first image from the second image to form the first image and the second image parallactic from each other, and the lens grating layer includes a plurality of lenses; and providing an imaging component configured to reflect the first image and the second image parallactic from each other to an eyeball or an eye-box to form a three-dimensional virtual image. Preparing the lens grating layer includes: acquiring a set distance H_{y}, a set half-field-of-view angle θ_{y} of the display device, and a set refractive index n0_{y} of a light-transmitting medium body, wherein the set distance H_{y} represents a set distance from an intersection point of an arc surface of a lens of the lens grating layer and an optical axis of the lens to a pixel of the display panel, the light-transmitting medium body is at least one light-transmitting film layer disposed on a light-emitting side of the pixel in the display module, and the light-transmitting medium body includes at least the lens grating layer; obtaining a set width D_{y} of the lens according to Relational Formula One: D_{y} = 2H_{y} × tanθ_{y}' and a deformation formula of Snell's law: θ_{y}' = arcsin [(sinθ_{y}) / n0_{y}]; and preparing the lens according to the set width D_{y}.

In some embodiments of the present application, the lens grating layer further includes a light-transmitting substrate, and the plurality of lenses are disposed on a side of the light-transmitting substrate away from the display panel; and preparing the lens grating layer includes: acquiring a set focal length flens_{y} of the lens, a set refractive index n1_{y} of the lens, and a set refractive index n2_{y} of the light-transmitting substrate; obtaining a set radius of curvature R_{y} of the lens according to Relational Formula Two: R_{y} = flens_{y} × (n1_{y} - n2_{y}) / n2_{y}; and preparing the lens according to the set radius of curvature R_{y}.

In some embodiments of the present application, preparing the lens grating layer includes: obtaining a set height h1_{y} of the lens according to the set width D_{y} and the set radius of curvature R_{y}, combined with Relational Formula Three: $h {1}_{y} = {R}_{y} - \sqrt{{{R}_{y}}^{2} - {\left(\frac{{D}_{y}}{2}\right)}^{2}}$ ; and preparing the lens according to the set height h1_{y}.

In some embodiments of the present application, the set width D_{y} is equal to a width D of the lens, the set radius of curvature R_{y} is equal to a radius of curvature R of the lens, and the set height h1_{y} is equal to a height h1 of the lens.

In some embodiments of the present application, acquiring the set half-field-of-view angle θ_{y} of the display device includes: according to an equivalent virtual model of the display device, acquiring a width W'2 of a virtual image within eye-box and acquiring a distance △2 from the virtual image within eye-box to a virtual display module; and obtaining the set half-field-of-view angle θ_{y} of the display device according to the width W'2 of the virtual image within eye-box and the distance △2 from the virtual image within eye-box to the virtual display module, combined with a formula: tan θ_{y} = (W'₂) / (2 × △2).

The display device according to the embodiments of the present application includes a display module and an imaging component. The display module includes a display panel and a lens grating layer. The display panel is configured to display a same scene in a first image and a second image. The lens grating layer is configured to separate the first image from the second image to form the first image and the second image parallactic from each other. The imaging component is configured to reflect the first image and the second image parallactic from each other to an eyeball or an eye-box to form a three-dimensional virtual image. A width of the lens satisfies a first relational formula: D = 2H × tanθ', and θ' = arcsin [(sin θ) / n0].

It can be understood that, based on the condition that one pixel unit corresponds to one lens, that each pixel unit includes a first pixel and a second pixel, and that the first pixel and the second pixel are located on both sides of an optical axis of the lens, in the display device of the embodiments of the present application, the width of the lens is set to satisfy the first relational formula, reducing the risk of light crosstalk between two adjacent pixel units, and improving the ability of the lens to allocate the first image and the second image, thereby reducing the risk of crosstalk between the first image and the second image, and enhancing the three-dimensional display effect.

### BRIEF DESCRIPTION OF THE DRAWINGS

FIG. 1 is a schematic structural diagram of a display device provided by embodiments of the present application.
FIG. 2 is a schematic structural diagram of a display module of a display device provided by embodiments of the present application.
FIG. 3 is a schematic structural diagram of a lens of a display device provided by embodiments of the present application.
FIG. 4 is a diagram showing display effect of a first image and a second image of a display device provided by embodiments of the present application.
FIG. 5 is a schematic flowchart of a manufacturing method of a display device provided by embodiments of the present application.
FIG. 6 is a calculation model of an equivalent lens of an AR head-up display optical system.
FIG. 7 shows a three-dimensional equivalent virtual model of a display device according to embodiments of the present application.

### DETAILED DESCRIPTION

Technical proposals in embodiments of the present application will be described clearly and completely below in conjunction with the accompanying drawings in the embodiments of the present application, and it is apparent that described embodiments are only some of the embodiments and not all of the embodiments of the present application. Based on the embodiments of the present application, all other embodiments obtained by those skilled in the art without creative work fall within the protection scope of the present application. In addition, it should be understood that specific embodiments described herein are only used to explain and illustrate the present application and are not intended to limit the present application. In the present application, the various embodiments may be combined with each other but will not be described one by one. and unless otherwise specified, orientational terms used such as "upper" and "lower" usually refer to upper and lower positions of a device in actual use or working state, and specifically orientations in the drawings, while the terms "inside" and "outside" refer to a position relative to an outline of the device. The terms "first", "second", "third" etc. are used for indicative purposes only and do not impose numerical requirements or establish order.

Embodiments of the present application provide a display device and a manufacturing method thereof, which will be described in detail below. It should be noted that the order of description of the following embodiments does not limit the preferred order of the embodiments.

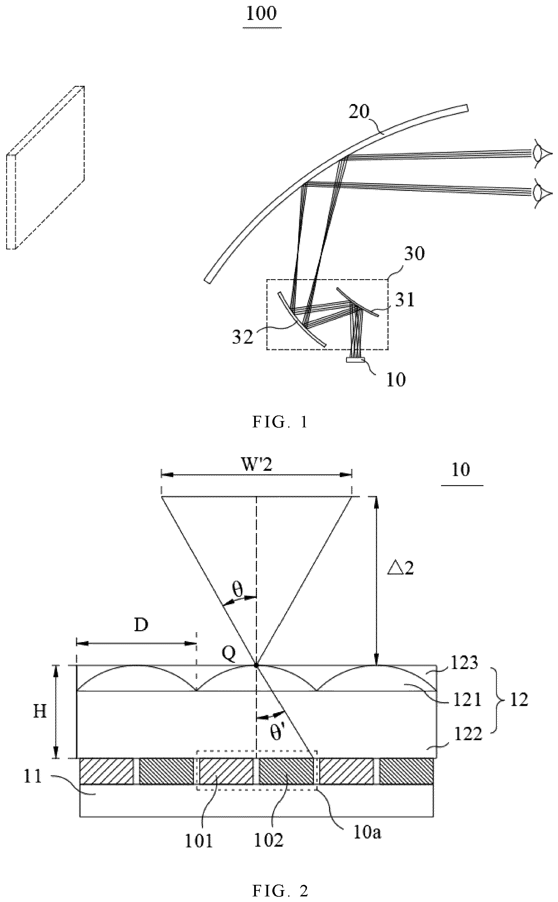

Referring to FIG. 1 and FIG. 2, embodiments of the present application provide a display device 100 including a display module 10 and an imaging component 20.

The display module 10 includes a display panel 11 and a lens grating layer 12, and the lens grating layer 12 is provided on the light-emitting side of the display panel 11. The display panel 11 is configured to display a first image and a second image. The lens grating layer 12 is configured to separate the first image from the second image to form the first image and the second image parallactic from each other.

The imaging component 20 is configured to reflect the first image and the second image parallactic from each other to an eyeball or an eye-box to form a three-dimensional virtual image.

It should be noted that, taking the reception of images by the eyeball as an example, the lens grating layer 12 is configured to split the light of the image light displayed by the display panel 11. This ensures that after the image light is reflected by the imaging component 20, the first image ultimately enters the left eye, and the second image enters the right eye. Since the first image and second image are parallactic from each other, and the contents of the two images are at least partially the same, the user perceives an object with depth sense and spatial sense. The images seen by the left and right eyes are synthesized in the user's brain into a three-dimensional image with depth sense, achieving three-dimensional display effect.

Taking the reception of images by the eye-box as an example, the eye-box is divided into a left region and a right region. The lens grating layer 12 is configured to split the image light displayed by the display panel 11, so that after the image light is reflected by the imaging component 20, the first image finally enters the left region of the eye-box, and the second image enters the right region of the eye-box. This allows the left and right eyes to see images of the same object from different angles, thereby controlling the are parallactic images on a virtual image plane to achieve three-dimensional display effects of popping out of and sinking into the screen.

In some embodiments, the lens grating layer 12 includes a plurality of lenses 121, and the plurality of lenses 121 are arranged along a first direction. The display panel 11 includes a plurality of pixel units 10a, and each pixel unit 10a corresponds to one of the lenses 121. That is, each of the lenses 121 performs pattern splitting on a corresponding one of the pixel units 10 a.

The pixel units 10a include first pixels 101 and second pixels 102. The first pixels 101 are configured to display the first image, and the second pixels 102 are configured to display the second image. The first pixel 101 is disposed on a side of an optical axis of the lens 121, and the second pixel 102 is disposed on another side of the optical axis of the lens 121.

It should be noted that the optical axis of lens 121 passes through a focal point of the lens 121 and coincides with a center line of the lens 121.

In some embodiments, in each of the pixel units 10a, a number of the first pixels 101 and a number of the second pixels 102 are set according to actual conditions. For example, one pixel unit 10a includes one first pixel 101 and one second pixel 102, or one pixel unit 10a includes at least two first pixels 101 and at least two second pixels 102, or in one pixel unit 10a, the number of the first pixels 101 and the number of the second pixels 102 may be the same or different.

In some embodiments, the lens 121 is a cylindrical lens.

In some embodiments, the lens grating layer 12 further includes a light-transmitting substrate 122, and the plurality of lenses 121 are disposed on a side of the light-transmitting substrate 122 away from the display panel 11.

In some embodiments, the lens grating layer 12 further includes a protective layer 123, and the protective layer 123 covers a side of the lenses 121 away from the light-transmitting substrate 122 to protect the lenses 121.

In some embodiments, the lenses 121 may also be directly formed on the display panel 11 to save the light-transmitting substrate 122.

In some embodiments of the present application, the imaging component 20 is a windshield panel of a vehicle, such as an automobile, a motorcycle, a bicycle, a boat, or an aircraft. In some other embodiments, the imaging component 20 may also be other components having light-transmitting and light-reflecting functions.

In some embodiments of the present application, the display device 100 further includes a reflective mirror assembly 30, and the reflective mirror assembly 30 is configured to reflect the first image and the second image parallactic from each other to the imaging component 20.

It can be understood that the reflective mirror assembly 30 is arranged in an optical path between the imaging component 20 and the display module 10 to realize multi-focal display. Adjusting the reflective mirror assembly can replace adjusting a primary mirror to reduce the difficulty of mechanical adjustment.

In some embodiments, the reflective mirror assembly 30 includes a first reflective mirror 31 and a second reflective mirror 32, and the first reflective mirror 31 is arranged on the light-emitting side of the display module 10. The first image and the second image pass through the first reflective mirror 31, the second reflective mirror 32, and the imaging component 20 in this order and reach the eyeball or the eye-box.

In some embodiments, the first reflective mirror 31 may be one of a planar mirror, a convex mirror, and a concave mirror. The second reflective mirror 32 may be a concave mirror.

Referring to FIG. 2, in some embodiments of the present application, on the optical axis of the lens 121, a distance from an intersection point Q of an arc surface of the lens 121 and the optical axis of the lens 121 to the pixel of the display panel 11 is defined as a first distance H.

A width D of the lens 121 satisfies a first relational formula: D = 2H × tanθ', and θ' = arcsin[(sinθ) / n0].

D represents the width of the lens 121, H represents the first distance, θ represents 100 a half-field-of-view angle of display device 100, n0 represents a refractive index of at least one light-transmitting film layer, disposed on a light-emitting side of the pixel in the display module 10, as a light-transmitting medium body, and the light-transmitting medium body includes at least the lens grating layer.

It can be understood that, based on the condition that one pixel unit 10a corresponds to one lens 121 and the first pixel 101 and the second pixel 102 are located on both sides of the optical axis of the lens 121, in the display device of the embodiments of the present application, the width D of the lens 121 is set to satisfy the first relational formula, reducing the risk of light crosstalk between two adjacent pixel units, and improving the ability of the lens to allocate the first image and the second image, thereby reducing the risk of crosstalk between the first image and the second image, and enhancing the three-dimensional display effect.

The display panel 11 may be one of a liquid crystal panel, an organic light-emitting panel, a quantum dot light-emitting panel, or a micro light-emitting diode panel. Taking the organic light-emitting panel as an example, the pixels are a portion where an organic light-emitting layer is located in opening regions of a pixel defining layer. Based on this, the light-transmitting film layers located on the light-emitting side of the pixels of the display module 10 include a cathode layer, an encapsulation layer, an optical adhesive layer, a cover plate, and the lens grating layer. Therefore, the light-transmitting medium body may include at least one of the cathode layer, the encapsulation layer, the optical adhesive layer, and the cover plate in addition to the lens grating layer.

In some embodiments, the light-transmitting medium body is the whole of all the light-transmitting film layers located on the light-emitting side of the pixels of the display module 10. In this way, based on the refractive index n0 of the light-transmitting medium body, a more precise incident angle θ' of the light from the pixel (light-emitting layer) exiting the light-transmitting medium body and reaching an interface between the light-transmitting medium body and air is obtained. The half-field-of-view angle θ of the display device 100 is the refraction angle of the light emitted from the interface between the light-transmitting medium body and the air.

Therefore, under the condition that the half-field-of-view angle θ and the refractive index n0 of the translucent medium are known, the incident angle θ' of the light can be determined according to Snell's law.

It can be understood that according to Snell's law, the incident angle θ' of the light at the interface between the light-transmitting medium body and the air can be determined by combining a relationship of refractive indexes of the various light-transmitting film layers of the light-transmitting medium body. The half-field-of-view angle θ of the display device 100 serves as a refraction angle at which the light emitted from the interface between the light-transmitting medium body and the air.

In some embodiments of the present application, the embodiments of the present application take the uniform refractive index n0 of the light-transmitting medium body as an object, d simplifying the relationship of light refraction between the film layers.

In some embodiments of the present application, the plurality of lenses 121 may be continuously arranged along the first direction. That is, the plurality of lenses 121 are periodically arranged in a direction of the width D.

In some embodiments of the present application, 50 micrometers ≤ D ≤ 300 micrometers, and 100 micrometers ≤ H ≤ 1500 micrometers.

For example, the width D of the lens 121 may be 50 micrometers, 60 micrometers, 70 micrometers, 80 micrometers, 90 micrometers, 100 micrometers, 110 micrometers, 120 micrometers, 130 micrometers, 140 micrometers, 150 micrometers, 160 micrometers, 170 micrometers, 180 micrometers, 190 micrometers, 200 micrometers, 210 micrometers, 220 micrometers, 230 micrometers, 240 micrometers, 250 micrometers, 260 micrometers, 270 micrometers, 280 micrometers, 290 micrometers, or 300 micrometers.

The first distance H may be 100 micrometers, 120 micrometers, 140 micrometers, 150 micrometers, 160 micrometers, 180 micrometers, 200 micrometers, 220 micrometers, 240 micrometers, 250 micrometers, 260 micrometers, 280 micrometers, 300 micrometers, 320 micrometers, 340 micrometers, 350 micrometers, 360 micrometers, 380 micrometers, 400 micrometers, 420 micrometers, 440 micrometers, 450 micrometers, 460 micrometers, 480 micrometers, 500 micrometers, 520 micrometers, 540 micrometers, 550 micrometers, 560 micrometers, 580 micrometers, 600 micrometers, 620 micrometers, 640 micrometers, 650 micrometers, 660 micrometers, 680 micrometers, 700 micrometers, 720 micrometers, 740 micrometers, 750 micrometers, 760 micrometers, 780 micrometers, 800 micrometers, 820 micrometers, 840 micrometers, 850 micrometers, 860 micrometers, 880 micrometers, 900 micrometers, 920 micrometers, 940 micrometers, 950 micrometers, 960 micrometers, 980 micrometers, 1000 micrometers, 1020 micrometers, 1040 micrometers, 1050 micrometers, 1060 micrometers, 1080 micrometers, 1100 micrometers, 1120 micrometers, 1140 micrometers, 1150 micrometers, 1160 micrometers, 1180 micrometers, 1200 micrometers, 1220 micrometers, 1240 micrometers, 1250 micrometers, 1260 micrometers, 1280 micrometers, 1300 micrometers, 1320 micrometers, 1340 micrometers, 1350 micrometers, 1360 micrometers, 1380 micrometers, 1400 micrometers, 1420 micrometers, 1440 micrometers, 1450 micrometers, 1460 micrometers, 1480 micrometers, or 1500 micrometers.

In some embodiments of the present application, the focal length of the lens 121 is equal to the first distance H.

A radius of curvature of the lens 121 satisfies a second relational formula: R = flens × (n1 - n2) / n2.

R represents the radius of curvature of the lens 121, flens represents the focal length of the lens 121, n1 represents a refractive index of the lens 121, n2 represents a refractive index of the light-transmitting substrate 122, and n1 > n2.

It can be understood that the radius of curvature R of the lens 121 satisfies the second relational formula, so that in an optical path in which the lens 121 and the light-transmitting substrate 122 are closely combined, the change in the focal length caused by the change in the refractive index of the light-transmitting substrate 122 is compensated by adjusting the radius of curvature R, realizing more accurate parallax separation and reducing the risk of light crosstalk between the first image and the second image.

In some embodiments, the radius of curvature R of the lens 121 is less than the focal length flens of the lens 121.

In some embodiments, the radius of curvature R of the lens 121 is equal to the focal length flens of the lens 121, minimizing the spherical aberration of the lens 121, reducing a deviation angle of the light of edge pixels, decreasing crosstalk between the left and right eye images (the first image and the second image), and improving the definition of the three-dimensional image.

In some embodiments, the light-transmitting substrate 122 may be arranged on the display panel 11, or may be shared with other components of the display panel 11, for example, a cover plate may be used as the light-transmitting substrate 122.

In some embodiments of the present application, 50 micrometers ≤ R ≤ 300 micrometers. For example, the radius of curvature R of the lens 121 may be 50 micrometers, 60 micrometers, 70 micrometers, 80 micrometers, 90 micrometers, 100 micrometers, 110 micrometers, 120 micrometers, 130 micrometers, 140 micrometers, 150 micrometers, 160 micrometers, 170 micrometers, 180 micrometers, 190 micrometers, 200 micrometers, 210 micrometers, 220 micrometers, 230 micrometers, 240 micrometers, 250 micrometers, 260 micrometers, 270 micrometers, 280 micrometers, 290 micrometers, or 300 micrometers.

In some embodiments, the refractive index n1 of the lens 121 ranges from 1.55 to 1.8, for example, it may be 1.55, 1.56, 1.57, 1.58, 1.59, 1.6, 1.61, 1.62, 1.63, 1.64, 1.65, 1.66, 1.67, 1.68, 1.69, 1.7, 1.71, 1.72, 1.73, 1.74, 1.75, 1.76, 1.77, 1.78, 1.79, or 1.8.

In some embodiments, the refractive index n2 of the light-transmitting substrate 122 ranges from 1.3 to 1.5, for example, it may be 1.3, 1.31, 1.32, 1.33, 1.34, 1.35, 1.36, 1.37, 1.38, 1.39, 1.4, 1.41, 1.42, 1.43, 1.44, 1.45, 1.46, 1.47, 1.48, 1.49, or 1.5.

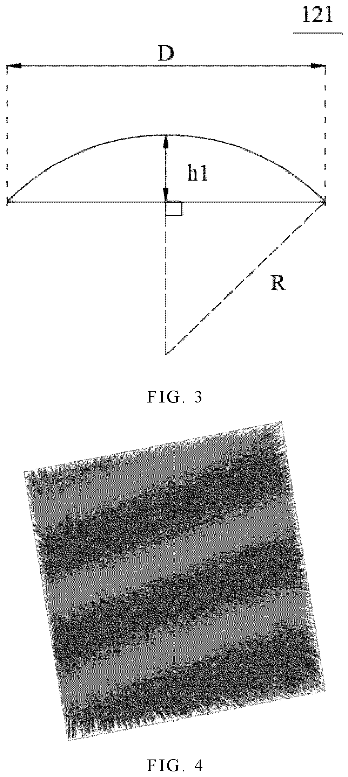

Referring to FIG. 3, in some embodiments of the present application, on the optical axis of the lens 121, a height of the lens 121 satisfies a third relational formula: $h 1 = R - \sqrt{{R}^{2} - {\left(\frac{D}{2}\right)}^{2}}$;
where h1 is the height of the lens 121.

It can be understood that the height h1 of the lens 121 can be determined based on the determination of the radius of curvature R and the width D of the lens 121. The height of the lens 121 satisfies the third relational formula, ensuring that while reducing the risk of light crosstalk between the first image and the second image, a design of the height h1 of the lens 121 does not affect the radius of curvature R of the lens 121.

Please refer to FIG. 4, and FIG. 4 is a diagram showing a simulation effect of the first image (red) and the second image (blue) after light splitting of the display device 100 according to the embodiments of the present application. As can be seen from FIG. 3, the crosstalk prevention effect of the first image and the second image of the display device 100 according to the embodiments of the present application is improved to a certain extent, enhancing the three-dimensional display effect.

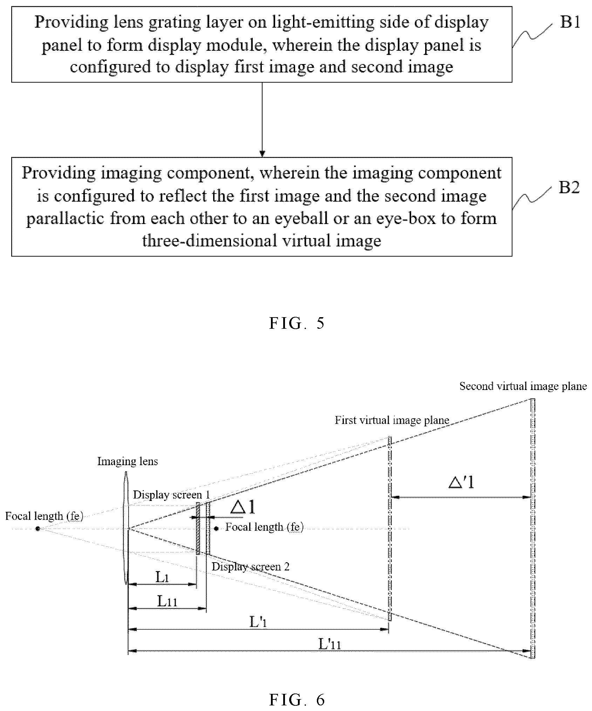

Referring to FIG. 5, accordingly, embodiments of the present application also provide a manufacturing method of the display device 100. The manufacturing method includes step B1 and step B2.

In the step B1, the lens grating layer 12 is provided on the light-emitting side of the display panel 11 to form the display module 10. The display panel 11 is configured to display the first image and the second image, and the lens grating layer 12 is configured to separate the first image from the second image to form the first image and the second image parallactic from each other, and the lens grating layer 12 includes the plurality of lenses 121.

In the step B2, the imaging component 20 is provided, and the imaging component 20 is configured to reflect the first image and the second image parallactic from each other to an eyeball or an eye-box to form a three-dimensional virtual image.

It should be noted that the manufacturing method of the display device 100 in the embodiments is configured to manufacture the display device 100 of the above-described embodiments, and the specific configuration of the display device 100 is described with reference to FIG. 1 to FIG. 2. Hereinafter, the display device 100 will be described as an AR head-up display as an example.

Before preparing the lens grating layer 12 of the display device 100 in the above-described embodiments, a calculation model and a three-dimensional equivalent virtual model of an equivalent lens of the AR head-up display optical system may be established. Referring to FIG. 6, FIG. 6 shows the calculation model of the equivalent lens of the AR head-up display optical system, and FIG. 6 is schematically illustrated with positions of different display screens.

In FIG. 6, L1 represents a position of a display screen 1 relative to an imaging lens, L11 represents a position of a display screen 2 relative to the imaging lens, and both L1 and L11 are less than the focal length fe of the imaging lens. △1 represents a distance between the display screen 1 and the display screen 2. L'1 represents a position of a first virtual image plane corresponding to the display screen 1 relative to the imaging lens, L'11 represents a position of a second virtual image plane corresponding to the display screen 2 relative to the imaging lens, and △'1 represents a distance between the first virtual image plane and the second virtual image plane. M1 and M11 represent image magnifications under two different imaging conditions, respectively. An effective focal length (fe), imaging object distances (L1 and L11), and image distances (L'1 and L'11) of the optical system can be obtained according to the following formulas. 1 / L'1 + 1 / L1 = 1 / fe; 1 / L'11 + 1 / L11 = 1 / fe; M1 = L'1 / L1; M11 = L'11 / L11; △1 = L11 - L1; and △'1 = L'11 - L'1.

According to the above formulas, it can obtain:
the imaging object distance L1 = (△'1 - M11 × △1) / (M11 - M1) = K; the image distance L'1 = M1 × K; and the effective focal length fe = M1 × K / (1 + M1).

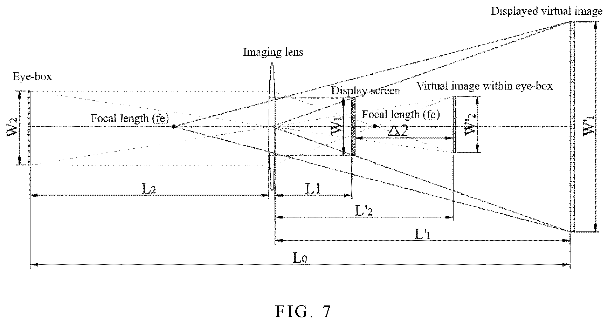

Please continue to refer to FIG. 7, and FIG. 7 is a diagram showing a three-dimensional equivalent virtual model of the display device 100 according to embodiments of the present application. The imaging lens is equivalent to the reflective mirror assembly 30 and the imaging component 20, and the display screens are equivalent to the display module 10.

In FIG. 7, W1 and W'1 correspond to a width of the display screen and a width of the displayed virtual image, respectively. L1 and L'1 correspond to a distance of the display screen relative to the imaging lens and a distance of the displayed virtual image relative to the imaging lens, respectively. W2 and W'2 correspond to a width of the eye-box and a width of the virtual image within eye-box , respectively. L0 represents the distance from the eye-box to the displayed virtual image, and L2 and L'2 correspond to a distance of the eye-box relative to the imaging lens and a distance of the virtual image within eye-box relative to the imaging lens, respectively. △ 2 represents a distance between the display screen and the virtual image within eye-box .

The width W'2 of the virtual image within eye-box corresponds to an observation area of the three-dimensional display, and the distance △2 relative to the display screen serves as the design parameter for an optimal viewing position. L2 = L0 - L'1, and 1 / L'2 + 1 / L2 = 1 / fe.

Based on the calculation results related to the equivalent lens in FIG. 6, the following relational formulas can be obtained: M2 = L'2 / L2 = fe /(L0 - M1 × K - fe); Δ2 = L'2 - L1; and W'2 = M2 × W2.

Referring to FIG. 2, in some embodiments of the present application, preparing the lens grating layer 12 includes the following step B01, step B02, and step B03.

In the step B01, a set distance H_{y}, a set half-field-of-view angle θ_{y} of the display device 100, and a set refractive index n0_{y} of the light-transmitting medium body are acquired. The set distance H_{y} represents a set distance from an intersection point of an arc surface of the lens of the lens grating layer 12 and an optical axis of the lens 121 to the pixel of the display panel, the light-transmitting medium body is at least one light-transmitting film layer disposed on a light-emitting side of the pixel in the display module, and the light-transmitting medium body includes at least the lens grating layer 12.

In the step B01, before preparing the display device 100, parameters such as optical structure parameters and half-field set angles of the display device 100 may be acquired.

It can be understood that the set half-field-of-view angle θ_{y} of the display device 100 may be a specification parameter set in advance. Based on this, the set half-field-of-view angle θ_{y} can be obtained directly from the specification parameters.

Additionally, in some embodiments, the set half-field-of-view angle θ_{y} of the display device 100 may also be acquired from the three-dimensional equivalent virtual model of the display device 100.

For example, in some embodiments, acquiring the set half-field-of-view angle θ_{y} of the display device 100 includes step B011 and step B012.

In the step B011, the width W'₂ of the virtual image within eye-box and a distance △2 from the virtual image within eye-box to the virtual display module is acquired according to the three-dimensional equivalent virtual model of the display device 100.

In the step B012, based on the width W'₂ of the virtual image within eye-box and the distance △2 from the virtual image within eye-box to the virtual display module (the display screen shown in FIG. 7), and combined with a formula: tan θy = (W'2) / (2 × △2), the set half-field-of-view angle θ_{y} of the display device 100 is obtained (refer to FIG. 2).

It should be noted that the set half-field-of-view angle θ_{y} is equivalent to the half-field-of-view angle θ. Under ideal conditions, the set half-field-of-view angle θ_{y} is equal to the half-field-of-view angle θ.

This then proceeds to the step B02.

In the step B02, based on the Relational Formula One: D_{y} = 2H_{y} × tanθ_{y}' and a deformation formula of Snell's law: θ_{y}' = arcsin [(sinθ_{y}) / n0_{y}], the set width D_{y} of the lens 121 is obtained.

In the step B03, the lens 121 is prepared according to the set width D_{y}.

It can be understood that, based on the condition that one pixel unit 10a corresponds to one lens 121 and the first pixel 101 and the second pixel 102 are located on both sides of the optical axis of the lens 121, in the display device 100 of the embodiments of the present application, the lens 121 is prepared according to the set width D_{y}, reducing the risk of light crosstalk between two adjacent pixel units 10a, and improving the ability of the lens 121 to allocate the first image and the second image, thereby reducing the risk of crosstalk between the first image and the second image, and enhancing the three-dimensional display effect.

In some embodiments, the set width D_{y} of the lens 121 is equal to the width D of the lens 121.

In some embodiments, the lens grating layer 12 further includes a light-transmitting substrate 122, and the plurality of lenses 121 are disposed on a side of the light-transmitting substrate 122 away from the display panel 11.

Based on this, the step B01 further includes: acquiring a set focal length flens_{y} of lens 121, a set refractive index n1_{y} of the lens 121, and a set refractive index n2_{y} of the light-transmitting substrate 122.

The step B02 further includes: obtaining a set radius of curvature R_{y} of the lens 121 according to Relational Formula Two: R_{y} = flens_{y} × (n1_{y} - n2_{y}) / n2_{y}.

The step B03 further includes: preparing the lens 121 according to the set radius of curvature R_{y}.

It can be understood that the radius of curvature R_{y} of the lens 121 satisfies Relational Formula Two, so that in an optical path in which the lens 121 and the light-transmitting substrate 122 are closely combined, the change in the focal length caused by the change in the refractive index of the light-transmitting substrate 122 is compensated y by adjusting the set radius of curvature R_{y}, realizing more accurate parallax separation and reducing the risk of light crosstalk between the first image and the second image.

In some embodiments, the set radius of curvature R_{y} of the lens 121 is equal to the radius of curvature R of the lens 121.

In some embodiments, the set radius of curvature R_{y} of the lens 121 is equal to the set focal length of the lens 121, minimizing the spherical aberration of the solid lens 121, reducing a deviation angle of the light of edge pixels, decreasing crosstalk between the left and right eye images (the first image and the second image), and improving the definition of the three-dimensional image.

In some embodiments of the present application, the step B02 further includes: obtaining a set height h1_{y} of the lens 121 according to the set width D_{y} and the set radius of curvature R_{y}, combined with Relational Formula Three: $h {1}_{y} = {R}_{y} - \sqrt{{{R}_{y}}^{2} - {\left(\frac{{D}_{y}}{2}\right)}^{2}}$ .

The step B03 further includes: preparing the lens 121 according to the set height h1_{y}.

In some embodiments, the set height h1_{y} of the lens 121 is equal to the height h1 of the lens 121.

That is, the lens 121 is prepared and formed on the light-transmitting substrate 122 according to the set height h1_{y}, the set radius of curvature R_{y}, and the set width D_{y}.

The display device according to embodiments of the present application includes a display module and an imaging component. The display module includes a display panel and a lens grating layer. The display panel 11 is configured to display a same scene in a first image and a second image. The lens grating layer 12 is configured to separate the first image from the second image to form the first image and the second image parallactic from each other. The imaging component is configured to reflect the first image and the second image parallactic from each other to an eyeball or an eye-box to form a three-dimensional virtual image. The width of the lens 121 satisfies the first relational formula: D = 2H × tanθ', and θ' = arcsin[(sinθ) / n0].

It can be understood that, based on the condition that one pixel unit corresponds to one lens, that each pixel unit includes a first pixel and a second pixel, and that the first pixel and the second pixel are located on both sides of the optical axis of the lens 121, in the display device of the embodiments of the present application, the width of the lens 121 is set to satisfy the first relational formula, reducing the risk of light crosstalk between two adjacent pixel units, and improving the ability of the lens to allocate the first image and the second image, thereby reducing the risk of crosstalk between the first image and the second image, and enhancing the three-dimensional display effect.

The display device and the manufacturing method thereof provided by the embodiments of the present application are described in detail above, and the principles and implementations of the present application have been described herein with specific examples, and the description of the above implementations is only for helping to understand the methods and core ideas of the present application. Meanwhile, those skilled in the art may change the specific embodiments and the scope of application according to the ideas of the present application, and in summary, the contents of the present specification should not be construed as limiting the present application.

## Claims

1. A display device (100), comprising:
a display module (10) comprising a display panel (11) and a lens grating layer (12), wherein the lens grating layer (12) is disposed on a light-emitting side of the display panel (11), the display panel (11) is configured to display a first image and a second image, and the lens grating layer (12) is configured to separate the first image from the second image to form the first image and the second image parallactic from each other; and
an imaging component (20) configured to reflect the first image and the second image parallactic from each other to an eyeball or an eye-box to form a three-dimensional virtual image,
wherein the lens grating layer (12) comprises a plurality of lenses (121), and on an optical axis of each lens (121) of the plurality of lenses (121), a distance from an intersection point of an arc surface of the lens (121) and the optical axis of the lens (121) to a pixel of the display panel (11) is defined as a first distance; and
a width of the lens (121) satisfies a first relational formula: D = 2H × tanθ', and θ' = arcsin[(sinθ)/n0]; and
wherein D represents the width of the lens (121), H represents the first distance, θ represents a half-field-of-view angle of the display device (100), n0 represents a refractive index of at least one light-transmitting film layer, disposed on a light-emitting side of the pixel in the display module (10), as a light-transmitting medium body, and the light-transmitting medium body comprises at least the lens grating layer (12).

2. The display device (100) according to claim 1, wherein 50 micrometers ≤ D ≤ 300 micrometers, and 100 micrometers ≤ H ≤ 1500 micrometers.

3. The display device (100) according to claim 1, wherein the lens grating layer (12) further comprises a light-transmitting substrate (122), the plurality of lenses (121) are disposed on a side of the light-transmitting substrate (122) away from the display panel (11), and a focal length of the lens (121) is equal to the first distance; and
a radius of curvature of the lens (121) satisfies a second relational formula: R = flens × (n1 - n2) / n2; and
wherein R represents the radius of curvature of the lens (121), flens represents the focal length of the lens (121), n1 represents a refractive index of the lens (121), n2 represents a refractive index of the light-transmitting substrate (122), and n1 > n2.

4. The display device (100) according to claim 3, wherein 50 micrometers ≤ R ≤ 300 micrometers.

5. The display device (100) according to claim 3, wherein on the optical axis of the lens (121), a height of the lens (121) satisfies a third relational formula: $h 1 = R - \sqrt{{R}^{2} - {\left(\frac{D}{2}\right)}^{2}}$ ; and wherein h1 represents the height of the lens (121).

6. The display device (100) according to claim 3, further comprising a protective layer (123), wherein the protective layer (123) covers a side of the plurality of lenses (121) away from the light-transmitting substrate (122).

7. The display device (100) according to any one of claim 1 to claim 6, further comprising a reflective mirror assembly (30) configured to reflect the first image and the second image parallactic from each other to the imaging component (20).

8. The display device (100) according to claim 7, wherein the imaging component (20) is a windshield panel of a vehicle.

9. The display device (100) according to claim 7, wherein the reflective mirror assembly (30) comprises a first reflective mirror (31) and a second reflective mirror (32), and the first reflective mirror (31) is arranged on the light-emitting side of the display module (10); the first image and the second image pass through the first reflective mirror (31), the second reflective mirror (32), and the imaging component (20) in this order and reach the eyeball or the eye-box; and
the first reflective mirror (31) is one of a planar mirror, a convex mirror, and a concave mirror; and the second reflective mirror (32) is a concave mirror.

10. The display device (100) according to any one of claim 1 to claim 9, wherein the display panel (11) comprises a plurality of pixel units (10a), and each of the pixel units (10a) corresponds to one of the lenses (121); each of the pixel units (10a) comprises a first pixel (101) configured to display the first image and a second pixel (102) configured to display the second image, and the first pixel (101) and the second pixel (102) are disposed on both sides of the optical axis of a corresponding one of the lenses (121).

11. A manufacturing method of a display device (100), comprising:
providing a lens grating layer (12) on a light-emitting side of a display panel (11) to form a display module (10), wherein the display panel (10) is configured to display a first image and a second image, the lens grating layer (12) is configured to separate the first image from the second image to form the first image and the second image parallactic from each other, and the lens grating layer (12) comprises a plurality of lenses (121); and
providing an imaging component (20) configured to reflect the first image and the second image parallactic from each other to an eyeball or an eye-box to form a three-dimensional virtual image;
wherein preparing the lens grating layer (12) comprises:
acquiring a set distance H_{y}, a set half-field-of-view angle θ_{y} of the display device (100), and a set refractive index n0_{y} of a light-transmitting medium body, wherein the set distance H_{y} represents a set distance from an intersection point of an arc surface of a lens (121) of the lens grating layer (12) and an optical axis of the lens (121) to a pixel of the display panel (11), the light-transmitting medium body is at least one light-transmitting film layer disposed on a light-emitting side of the pixel in the display module (10), and the light-transmitting medium body comprises at least the lens grating layer (12);
obtaining a set width D_{y} of the lens according to Relational Formula One: D_{y} = 2H_{y} × tanθ_{y}' and a deformation formula of Snell's law: θ_{y}' = arcsin [(sinθ_{y}) / n0_{y}]; and
preparing the lens according to the set width D_{y}.

12. The manufacturing method of the display device (100) according to claim 11, wherein the lens grating layer (12) further comprises a light-transmitting substrate (122), and the plurality of lenses (121) are disposed on a side of the light-transmitting substrate (122) away from the display panel (11); and preparing the lens grating layer (12) comprises:
acquiring a set focal length flens_{y} of the lens (121), a set refractive index n1_{y} of the lens (121), and a set refractive index n2_{y} of the light-transmitting substrate (122);
obtaining a set radius of curvature R_{y} of the lens (121) according to Relational Formula Two: R_{y} = flens_{y} × (n1_{y} - n2_{y}) / n2_{y}; and
preparing the lens (121) according to the set radius of curvature R_{y}.

13. The manufacturing method of the display device (100) according to claim 12, wherein preparing the lens grating layer (12) comprises:
obtaining a set height h1_{y} of the lens (121) according to the set width D_{y} and the set radius of curvature R_{y}, combined with Relational Formula Three: $h {1}_{y} = {R}_{y} - \sqrt{{{R}_{y}}^{2} - {\left(\frac{{D}_{y}}{2}\right)}^{2}}$ ; and
preparing the lens (121) according to the set height h1_{y}.

14. The manufacturing method of the display device (100) according to claim 13, wherein the set width D_{y} is equal to a width D of the lens (121), the set radius of curvature R_{y} is equal to a radius of curvature R of the lens (121), and the set height h1_{y} is equal to a height h1 of the lens (121).

15. The manufacturing method of the display device (100) according to any one of claim 11 to claim 14, wherein acquiring the set half-field-of-view angle θ_{y} of the display device (100) comprises:
according to an equivalent virtual model of the display device (100), acquiring a width W'2 of a virtual image within eye-box and acquiring a distance △2 from the virtual image within eye-box to a virtual display module; and
obtaining the set half-field-of-view angle θ_{y} of the display device (100) according to the width W'2 of the virtual image within eye-box and the distance △2 from the virtual image within eye-box to the virtual display module, combined with a formula: tan θ_{y} = (W'₂) / (2 × △2).

## Amended claims

### Amended claims in accordance with Rule 137(2) EPC.

1. A display device (100), comprising:
a display module (10) comprising a display panel (11) and a lens grating layer (12), wherein the lens grating layer (12) is disposed on a light-emitting side of the display panel (11), the display panel (11) is configured to display a first image and a second image, and the lens grating layer (12) is configured to separate the first image from the second image to form the first image and the second image parallactic from each other; and
an imaging component (20) configured to reflect the first image and the second image parallactic from each other to an eyeball or an eye-box to form a three-dimensional virtual image,
**characterized in that** the lens grating layer (12) comprises a light-transmitting substrate (122) disposed on a light-emitting side of pixels of the display module (10), a plurality of lenses (121) disposed on a side of the light-transmitting substrate (122) away from the display panel (11), and a protective layer (123) covering a side of the plurality of lenses (121) away from the light-transmitting substrate (122), and the light-transmitting substrate (122), the plurality of lenses (121), and the protective layer (123) together form a light-transmitting medium body;
wherein on an optical axis of each lens (121) of the plurality of lenses (121), a distance from an intersection point of an arc surface of the lens (121) and the optical axis of the lens (121) to the pixels of the display panel (11) is defined as a first distance, and a focal length of the lens (121) is equal to the first distance; and
wherein a width of the lens (121) satisfies a first relational formula: D = 2H × tanθ', and θ' = arcsin[(sinθ)/n0], where D represents the width of the lens (121), H represents the first distance, θ represents a half-field-of-view angle of the display device (100), as well as a refraction angle corresponding to an incident angle θ' after refracted through the light-transmitting medium body, n0 represents a refractive index of the light-transmitting medium body.

2. The display device (100) according to claim 1, wherein 50 micrometers ≤ D ≤ 300 micrometers, and 100 micrometers ≤ H ≤ 1500 micrometers.

3. The display device (100) according to claim 1, wherein
a radius of curvature of the lens (121) satisfies a second relational formula: R = flens × (n1 - n2) / n2; and
wherein R represents the radius of curvature of the lens (121), flens represents the focal length of the lens (121), n1 represents a refractive index of the lens (121), n2 represents a refractive index of the light-transmitting substrate (122), and n1 > n2.

4. The display device (100) according to claim 3, wherein 50 micrometers ≤ R ≤ 300 micrometers.

5. The display device (100) according to claim 3, wherein on the optical axis of the lens (121), a height of the lens (121) satisfies a third relational formula: $h 1 = R - \sqrt{{R}^{2} - {\left(\frac{D}{2}\right)}^{2}}$ ; and
wherein h1 represents the height of the lens (121).

6. The display device (100) according to any one of claim 1 to claim 5, further comprising a reflective mirror assembly (30) configured to reflect the first image and the second image parallactic from each other to the imaging component (20).

7. The display device (100) according to claim 6, wherein the imaging component (20) is a windshield panel of a vehicle.

8. The display device (100) according to claim 6, wherein the reflective mirror assembly (30) comprises a first reflective mirror (31) and a second reflective mirror (32), and the first reflective mirror (31) is arranged on the light-emitting side of the display module (10); the first image and the second image pass through the first reflective mirror (31), the second reflective mirror (32), and the imaging component (20) in this order and reach the eyeball or the eye-box; and
the first reflective mirror (31) is one of a planar mirror, a convex mirror, and a concave mirror; and the second reflective mirror (32) is a concave mirror.

9. The display device (100) according to any one of claim 1 to claim 8, wherein the display panel (11) comprises a plurality of pixel units (10a), and each of the pixel units (10a) corresponds to one of the lenses (121); each of the pixel units (10a) comprises a first pixel (101) configured to display the first image and a second pixel (102) configured to display the second image, and the first pixel (101) and the second pixel (102) are disposed on both sides of the optical axis of a corresponding one of the lenses (121).

10. A manufacturing method of a display device (100), comprising:
providing a lens grating layer (12) on a light-emitting side of a display panel (11) to form a display module (10), wherein the display panel (10) is configured to display a first image and a second image, the lens grating layer (12) is configured to separate the first image from the second image to form the first image and the second image parallactic from each other; and
providing an imaging component (20) configured to reflect the first image and the second image parallactic from each other to an eyeball or an eye-box to form a three-dimensional virtual image;
**characterized in that** the lens grating layer (12) comprises a light-transmitting substrate (122) disposed on a light-emitting side of pixels of the display module (10), a plurality of lenses (121) disposed on a side of the light-transmitting substrate (122) away from the display panel (11), and a protective layer (123) covering a side of the plurality of lenses (121) away from the light-transmitting substrate (122), and the light-transmitting substrate (122), the plurality of lenses (121), and the protective layer (123) together form a light-transmitting medium body;
wherein preparing the lens grating layer (12) comprises:
acquiring a set distance H_{y}, a set focal length flens_{y} of the lens (121), a set half-field-of-view angle θ_{y} of the display device (100), and a set refractive index n0_{y} of the light-transmitting medium body, wherein the set distance H_{y} represents a set distance from an intersection point of an arc surface of the lens (121) of the lens grating layer (12) and an optical axis of the lens (121) to the pixels of the display panel (11), the set half-field-of-view angle θ_{y} also represents a refraction angle corresponding to an incident angle θ_{y}' after refracted through the light-transmitting medium body, and the set focal length flens_{y} of the lens (121) is equal to the set distance H_{y};
obtaining a set width D_{y} of the lens (121) according to Relational Formula One: D_{y} = 2H_{y} × tanθ_{y}' and a deformation formula of Snell's law: θ_{y}' = arcsin [(sinθ_{y}) / n0_{y}]; and
preparing the lens (121) according to the set width D_{y}.

11. The manufacturing method of the display device (100) according to claim 10, wherein preparing the lens grating layer (12) comprises:
acquiring a set refractive index n1_{y} of the lens (121) and a set refractive index n2_{y} of the light-transmitting substrate (122);
obtaining a set radius of curvature R_{y} of the lens (121) according to Relational Formula Two: R_{y} = flens_{y} × (n1_{y} - n2_{y}) / n2_{y}; and
preparing the lens (121) according to the set radius of curvature R_{y}.

12. The manufacturing method of the display device (100) according to claim 11, wherein preparing the lens grating layer (12) comprises:
obtaining a set height h1_{y} of the lens (121) according to the set width D_{y} and the set radius of curvature R_{y}, combined with Relational Formula Three: $h {1}_{y} = {R}_{y} - \sqrt{{{R}_{y}}^{2} - {\left(\frac{{D}_{y}}{2}\right)}^{2}}$ ; and
preparing the lens (121) according to the set height h1_{y}.

13. The manufacturing method of the display device (100) according to claim 12, wherein the set width D_{y} is equal to a width D of the lens (121), the set radius of curvature R_{y} is equal to a radius of curvature R of the lens (121), and the set height h1_{y} is equal to a height h1 of the lens (121).

14. The manufacturing method of the display device (100) according to any one of claim 10 to claim 13, wherein acquiring the set half-field-of-view angle θ_{y} of the display device (100) comprises:
according to an equivalent virtual model of the display device (100), acquiring a width W'2 of a virtual image within eye-box and acquiring a distance △2 from the virtual image within eye-box to a virtual display module; and
obtaining the set half-field-of-view angle θ_{y} of the display device (100) according to the width W'2 of the virtual image within eye-box and the distance △2 from the virtual image within eye-box to the virtual display module, combined with a formula: $tan {θ}_{y} = \left(W{′}_{2}\right) / \left(2\times Δ2\right) .$
